# FASCICULE DE BREVET EUROPEEN

(11) **EP 0 993 982 B1**
(45) Date de publication et mention de la délivrance du brevet: **30.07.2003**
(21) Numéro de dépôt: 99402472.7
(22) Date de dépôt: 08.10.1999
(51) Int. Cl.: B60K 17/356, B60K 23/08

(54) **Dispositif d'assistance motrice pour un véhicule ayant une transmission principale mécanique**
Hilfsantriebsvorrichtung für Fahrzeug mit mechanischem Hauptantrieb
Auxilliary drive device for vehicle with mechanical main drive

(30) Priorité: 12.10.1998 FR 9812728
(43) Date de publication de la demande: 19.04.2000
(73) Titulaire: POCLAIN HYDRAULICS INDUSTRIE, 60411 Verberie (FR)
(72) Inventeur: Maletschek, Karl-Günther, 64850 Grossostheim-Schaafheim (DE); Rouillard, Jean-Marie, 60610 La Croix Saint-Ouen (FR)
(74) Mandataire: Intès, Didier Gérard André

(56) Documents cités:
- FR-A- 1 425 800
- FR-A- 2 426 812
- FR-A- 2 504 987
- US-A- 3 902 566
- US-A- 4 140 196
- US-A- 5 682 958

## Description

La présente invention concerne un dispositif d'assistance motrice pour un véhicule ayant une transmission principale mécanique apte à entraîner des organes de déplacement du véhicule, le dispositif comprenant une source principale de fluide sous pression susceptible d'être entraînée par des premiers moyens d'entraînement pour délivrer du fluide sous pression et au moins un moteur hydraulique susceptible d'être alimenté en fluide sous pression par la source principale de fluide pour entraîner au moins un organe de déplacement du véhicule, ce moteur ayant un stator et un rotor susceptible de tourner par rapport au stator autour d'un axe de rotation, le moteur comprenant un bloc-cylindres qui appartient à un premier des deux éléments constitués par le stator et le rotor, qui est disposé à l'intérieur d'un carter et qui présente une pluralité d'ensembles de cylindres et de pistons disposés radialement par rapport à l'axe de rotation, ainsi qu'un organe de réaction pour lés pistons qui appartient au deuxième desdits deux éléments, le moteur présentant, en outre, un conduit principal d'alimentation de fluide et un conduit principal d'échappement de fluide susceptibles d'être mis en communication avec les cylindres, ainsi qu'un conduit auxiliaire raccordé à un espace interne ménagé à l'intérieur du carter autour du bloc-cylindres et susceptible d'être mis en communication avec un réservoir de retour de fluide, le moteur étant susceptible d'adopter une configuration de travail, dans laquelle les pistons coopèrent avec l'organe de réaction et sont susceptibles de générer un couple de sortie sous l'effet du fluide délivré par la source principale de fluide, ainsi qu'une configuration dite de roue libre, dans laquelle les pistons sont maintenus en position rentrée à l'intérieur des cylindres de telle sorte que le rotor est libre de tourner par rapport au stator sans générer de couple de sortie.

Le brevet français n° 1 425 800, qui sert de base pour la présentation en deux parties de la revendication 1,divulgue un moteur hydraulique d'assistance et s'intéresse plus particulièrement au maintien de ce moteur en configuration de roue libre. Il propose ainsi d'utiliser le conduit de retour de fuites de ce moteur, qui correspond au conduit auxiliaire évoqué ci-dessus, pour le raccorder temporairement à une source de fluide sous pression ce qui, en faisant régner une pression relativement élevée à l'intérieur du carter, permet de solliciter les pistons de telle sorte qu'ils rentrent radialement à l'intérieur du bloc-cylindres. Ce document indique en outre que, pour passer de la configuration de roue libre à la configuration de travail, il faut déconnecter le conduit de retour de fuites de cette source de fluide sous pression et le raccorder à un réservoir de retour de fluide.

Les brevets français n° 2 426 812 et n° 2 504 987 proposent quant à eux d'utiliser des ressorts de rappel élastique pour maintenir les pistons en position rentrée dans leurs cylindres respectifs, en configuration de roue libre du moteur. En ce qui concerne le passage en configuration de travail, ces documents indiquent seulement que, en fonctionnement, les cylindres sont alimentés en fluide sous pression, ce qui place les galets portés par les extrémités libres des pistons au contact de la came, à l'encontre de l'effort de rappel élastique exercé par les ressorts.

Classiquement, un véhicule équipé du dispositif d'assistance motrice du type précité est normalement déplacé par des premiers organes de déplacement, par exemple les roues d'un premier essieu, entraînés par une transmission mécanique principale. C'est seulement lorsque le déplacement de ce véhicule nécessite, en plus de cet entraînement assuré par la transmission mécanique principale, un effort d'entraînement additionnel (par exemple en côte) ou un effort résistant (par exemple en descente) que l'on utilise le moteur hydraulique d'assistance. Ceci est par exemple le cas dans des conditions difficiles, par exemple en chantier ou sur terrain glissant. Classiquement, le moteur hydraulique d'assistance est destiné à entraîner d'autres organes de déplacement, par exemple les roues d'un deuxième essieu.

Avec les dispositifs existants, à partir d'une situation dans laquelle le véhicule est entraîné seulement par la transmission mécanique principale, il est nécessaire de réduire considérablement la vitesse de ce véhicule, voire de l'arrêter complètement, avant de solliciter le moteur hydraulique d'assistance de sa configuration de roue libre vers sa configuration de travail.

En effet, lorsque le véhicule est seulement entraîné par la transmission mécanique principale, les organes de déplacement qui sont attelés au moteur hydraulique d'assistance entraînent en rotation le rotor de ce moteur, qui est en configuration de roue libre. Lorsque l'on fait sortir les pistons de leurs cylindres pour placer leurs extrémités libres (éventuellement équipées de galets) en contact avec la came, cette mise en contact est brutale et il en résulte des chocs des pistons sur la came, ce qui risque d'entraîner une détérioration prématurée des extrémités libres de ces pistons (des galets) et de la came, ainsi que des claquements successifs qui sont désagréables et donnent une mauvaise impression de qualité au conducteur du véhicule.

La présente invention vise à proposer un dispositif pour lequel le passage de la configuration de roue libre à la configuration de travail s'effectue dans de meilleures conditions, ce qui permet, tout en évitant ou en limitant considérablement les risques d'usure prématurée des pièces du moteur ou les claquements désagréables, d'effectuer ce passage à une vitesse de déplacement du véhicule relativement élevée.

Ce but est atteint grâce au fait que le dispositif comprend des moyens pour réaliser les phases successives d'une séquence de passage du moteur de sa configuration de roue libre dans sa configuration de travail, cette séquence comprenant une phase d'initialisation dans laquelle le conduit auxiliaire est isolé du réservoir de retour de fluide et raccordé à un conduit dit de servitude, alimenté en fluide sous pression de telle sorte qu'une pression de fluide dite pression de servitude règne dans l'espace interne du carter et dans laquelle les conduits principaux d'alimentation et d'échappement sont placés à une même pression dite pression de remplissage, qui est inférieure à la pression de servitude mais supérieure à la pression du réservoir de retour de fluide, la séquence comprenant, en outre, après la phase d'initialisation, une phase d'embrayage au cours de laquelle le conduit auxiliaire est mis en communication avec le réservoir de retour de fluide et au cours de laquelle les conduits principaux d'alimentation et d'échappement sont isolés l'un de l'autre.

Dans la configuration de roue libre, les pistons peuvent être maintenus rentrés à l'intérieur des cylindres soit par une pression de fluide dans le carter, soit par des moyens de rappel tels que des ressorts élastiques.

Dans le premier cas, la pression de désactivation des pistons peut être égale ou sensiblement égale à la pression de servitude et être obtenue grâce au fait que le conduit de retour de fuites est raccordé à la source de pression de servitude. Dans la configuration de roue libre, les conduits principaux d'alimentation et d'échappement sont quant à eux classiquement raccordés au réservoir de retour de fluide.

Ainsi, dans ce premier cas, lorsque l'on décide de passer de la configuration de roue libre à la configuration de travail, la première condition d'obtention de la phase d'initialisation, c'est-à-dire l'obtention de la pression de servitude à l'intérieur du carter, est déjà acquise et la phase d'initialisation est réalisée en plaçant les conduits principaux d'alimentation et d'échappement à la pression de remplissage, qui est supérieure à la pression du réservoir de retour de fluide.

Lorsque des moyens de rappel élastiques tels que des ressorts sont utilisés pour désactiver les pistons, les conduits principaux et les conduits de retour de fluide sont normalement raccordés au réservoir de retour de fluide en configuration de roue libre. Par conséquent, lorsque l'on décide de passer de cette configuration à la configuration de travail il faut, d'une part, raccorder le conduit de retour de fuites au conduit de servitude pour faire régner la pression de servitude et, d'autre part, placer les conduits principaux d'alimentation et d'échappement à la pression de remplissage.

De tels moyens de rappel élastiques permettent de désactiver le moteur hydraulique sans avoir à entretenir une pression de désactivation en permanence dans le circuit.

En tout état de cause, à l'issue de la phase d'initialisation, les conduits principaux d'alimentation et d'échappement se trouvent à la pression de remplissage, tandis que l'espace interne du carter se trouve à la pression de servitude, légèrement supérieure à la pression de remplissage. Dans cette situation, lorsque, au cours de la phase d'embrayage, on place le conduit auxiliaire en communication avec le réservoir de retour de fluide, on diminue la pression à l'intérieur du carter, de sorte que la pression commune des conduits principaux devient rapidement supérieure à ladite pression à l'intérieur du carter, ce qui fait en sorte que les pistons sortent tous en même temps de leurs cylindres pour parvenir tous en même temps au contact de la came. Les claquements sont évités grâce à la diminution progressive, bien que rapide, de la pression de fluide dans le carter.

Au cours de la phase d'embrayage, les conduits principaux d'alimentation et d'échappement peuvent être isolés l'un de l'autre en même temps que l'on met le conduit auxiliaire en communication avec le réservoir de retour de fluide, ou peu de temps après cette opération.

Généralement, même lorsque les conduits principaux d'alimentation et d'échappement sont isolés l'un de l'autre, la pression dans le conduit principal d'échappement est supérieure à la pression du réservoir de retour de fluide, puisqu'une pression minimale de gavage est habituellement entretenue dans les conduites d'alimentation et d'échappement. Ainsi, bien que le conduit principal d'échappement soit placé à une "basse pression" par rapport à la pression d'alimentation, cette "basse pression" est supérieure à la pression (voisine de la pression atmosphérique) du réservoir de retour de fluide, de sorte que même les pistons raccordés au conduit principal d'échappement ont tendance à sortir de leurs cylindres lors de la phase d'embrayage.

Selon un mode de réalisation avantageux, au cours de la phase d'embrayage, les conduits principaux sont isolés l'un de l'autre seulement après que le conduit auxiliaire ait été mis en communication avec le réservoir de retour de fluide.

Ceci garantit une mise en contact rapide des extrémités libres des pistons (éventuellement équipées de galets) avec la came, la vitesse de "sortie" des pistons étant sensiblement la même, que ces pistons soient raccordés au conduit d'alimentation ou au conduit d'échappement.

Dans ce cas, selon une première variante, la phase d'embrayage comprend une première étape au cours de laquelle le conduit auxiliaire est mis en communication avec le réservoir de retour de fluide alors que les conduits principaux restent à la pression de remplissage, suivie par une deuxième étape au cours de laquelle lesdits conduits principaux sont isolés l'un de l'autre alors que les premiers moyens d'entraînement sont inactifs, et par une troisième étape au cours de laquelle lesdits premiers moyens d'entraînement sont activés de manière à entraîner la source principale de fluide sous pression.

Dans cette première variante, la phase d'embrayage est exécutée en trois étapes successives. On choisit en particulier de ne mettre en oeuvre la source principale de fluide sous pression que lorsque tous les pistons sont au contact de la came. Ainsi, lors de la deuxième étape de la phase d'embrayage, le rotor du moteur est entraîné par la ou les roues auxquelles il est attelé ce qui, le piston étant en contact de la came, occasionne une différence de pression entre les conduits principaux d'alimentation et d'échappement isolés l'un de l'autre.

Le fait d'activer ensuite la source principale de fluide sous pression lors de la troisième étape de la phase d'embrayage permet d'accroître progressivement cette différence de pression et de faire jouer son rôle d'assistance au moteur hydraulique. En d'autres termes, durant la deuxième étape de la phase d'embrayage, ce sont les organes de déplacement attelés au moteur hydraulique qui jouent un rôle "moteur", tandis que le moteur hydraulique fonctionne comme une pompe.

Selon une deuxième variante, la phase d'embrayage comprend une première étape au cours de laquelle les premiers moyens d'entraînement sont activés de manière à entraîner la source principale de fluide sous pression alors que le conduit auxiliaire reste isolé du réservoir de retour de fluide, suivie par une deuxième étape au cours de laquelle le conduit auxiliaire est mis en communication avec le réservoir de retour de fluide et au cours de laquelle les conduits principaux sont isolés l'un de l'autre.

Selon cette deuxième variante, on choisit d'abord d'entraîner la source principale de fluide sous pression avant de faire sortir les pistons de leurs cylindres pour les mettre en contact avec la came. Dès que les conduits principaux d'alimentation et d'échappement sont isolés l'un de l'autre et raccordés à la source principale de fluide sous pression, on obtient une différence de pression importante entre les conduits de cylindres raccordés aux conduits principaux (au moins pour ceux qui sont raccordés au conduit principal d'alimentation) et l'espace interne du carter qui est mis à la pression du réservoir de retour de fluide, ce qui accélère le déplacement des pistons dans le sens de leur mise en contact avec la came.

De plus, ceci permet de faire en sorte que la source principale de fluide sous pression soit embrayée sur son moteur d'entraînement (en général, le moteur thermique de la transmission principale) dans les conditions dans lesquelles les conduits principaux d'alimentation et d'échappement sont encore raccordés entre eux, ce qui implique que cette source principale de fluide sous pression ne génère encore aucun couple pour le moteur hydraulique ou n'est soumise à aucun couple résistant de la part de ce dernier. Ceci permet de réaliser un embrayage plus simple et moins coûteux que dans une situation dans laquelle un couple serait déjà présent lors de l'embrayage.

Selon un autre mode de réalisation, la phase d'embrayage comprend une première étape au cours de laquelle les premiers moyens d'entraînement sont activés de manière à entraîner la source principale de fluide sous pression alors que le conduit auxiliaire reste isolé du réservoir de retour de fluide, cette première étape étant suivie par une étape intermédiaire au cours de laquelle les conduits principaux sont momentanément isolés l'un de l'autre puis à nouveau momentanément raccordés l'un à l'autre, et par une étape finale au cours de laquelle le conduit auxiliaire est mis en communication avec le réservoir de retour de fluide et au cours de laquelle les conduits principaux sont isolés l'un de l'autre.

L'étape intermédiaire de la phase d'embrayage suit l'activation des moyens d'entraînement mécanique de la pompe. Elle permet, par l'isolement momentané des conduits principaux avant que le conduit auxiliaire ne soit mis en communication avec le conduit de retour de fluide, suivi d'une remise en communication de ces conduits principaux, d'alléger les sollicitations qui, lors de l'embrayage, affectent les moyens d'entraînement mécanique de la pompe servant à alimenter le moteur et d'éviter les surpressions dans les conduits principaux. Après cette étape intermédiaire on retrouve, comme dans le mode de réalisation précédent et dans ses variantes, l'étape finale de la phase d'embrayage au cours de laquelle le conduit auxiliaire est mis en communication avec le réservoir de retour de fluide et au cours de laquelle les conduits principaux sont durablement isolés l'un de l'autre.

Avantageusement, selon l'invention, les moyens pour réaliser les phases successives de la séquence de passage du moteur de sa configuration de roue libre dans sa configuration de travail comprennent des valves commandées par des moyens de commande mis en oeuvre par une unité de commande.

Cette unité de commande gère le passage par les différentes phases de la séquence et par les différentes étapes de ces phases. Elle peut être formée par des circuits électroniques dédiés, mais il s'agit avantageusement d'une unité de commande de type processeur, microprocesseur ou microcontrôleur. Elle gère alors non seulement le passage par les différentes phases de la séquence, mais également la durée de ces phases et de leurs étapes.

Dans ce cas, les moyens de commande des valves sont avantageusement des moyens pneumatiques.

En effet, une source de pression pneumatique est classiquement installée sur un véhicule équipé du dispositif selon l'invention pour assurer le freinage de ce dernier. Classiquement, la pression d'air comprimé sert à desserrer les freins qui sont maintenus serrés en l'absence d'air comprimé. L'utilisation de moyens pneumatiques permet donc de tirer profit d'une source pression d'air déjà existante dans le véhicule. De plus, lorsque le véhicule est en déplacement, l'air comprimé est mis sous pression pour desserrer les freins de ce véhicule et la pression d'air est naturellement disponible pour maintenir les valves commandées dans la position souhaitée, sans perte d'énergie, et ceci même en configuration de roue libre du moteur hydraulique d'assistance.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre schématiquement les différents éléments d'un circuit hydraulique comprenant un dispositif selon l'invention, avec ses moyens de commande,
- les figures 2 et 3 sont des tables de vérité illustrant la séquence de passage de la configuration de roue libre à la configuration de travail, respectivement selon la première et selon la deuxième variante exposées précédemment,
- la figure 4 est analogue à la figure 1 et illustre un circuit quelque peu différent,
- la figure 5 présente une variante du circuit de la figure 1, et
- la figure 6 est une table de vérité illustrant la séquence pour le circuit de la figure 5.

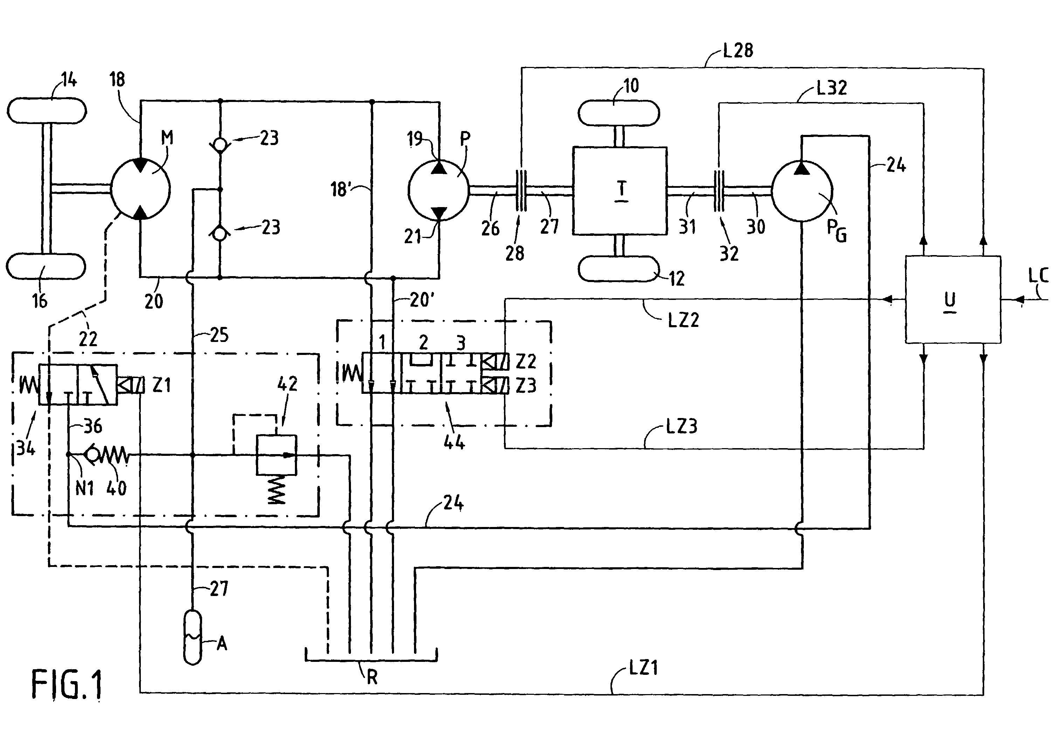

Le circuit représenté sur la figure 1 comprend une transmission T à laquelle sont attelées les roues 10 et 12 d'un premier essieu d'un véhicule. La transmission T est la transmission mécanique principale du véhicule qui est utilisée pour déplacer le véhicule dans des conditions normales de déplacement, par exemple sur route.

La figure 1 montre également un moteur hydraulique M auquel sont attelées les roues 14 et 16 d'un deuxième essieu du véhicule. Le moteur M est un moteur hydraulique d'assistance et il est mis en oeuvre pour assister la transmission T, c'est-à-dire pour exercer un effort d'entraînement supplémentaire sur les roues 14 et 16 du deuxième essieu, alors que les roues 10 et 12 continuent d'être entraînées par la transmission T.

De manière connue en soi, le moteur M est un moteur hydraulique à pistons radiaux, comprenant un stator et un rotor. Il peut s'agir d'un moteur dit "à carter tournant", auquel cas le rotor comprend le carter et la came du moteur, tandis que le stator comprend le bloc-cylindres, ou d'un moteur dit "à arbre tournant", auquel cas le bloc-cylindres et un arbre de sortie lié à celui-ci forment le rotor, tandis que le carter et la came appartiennent au stator. Il s'agit par exemple d'un moteur du type divulgué par le brevet français n° 2 504 987.

Le circuit hydraulique comprend une pompe principale P qui, dans l'exemple représenté, est une pompe réversible à cylindrée fixe. Le moteur hydraulique M est raccordé à cette pompe P par des conduits principaux 18 et 20 qui sont respectivement raccordés aux sorties principales 19 et 21 de la pompe P et qui, selon le sens de rotation de cette dernière, servent respectivement à l'alimentation et à l'échappement de ce moteur. De manière connue en soi, le moteur comporte en outre un conduit auxiliaire 22 susceptible d'être raccordé à un réservoir de retour de fluide R pour servir de conduit de retour de fuites.

Dans l'exemple représenté, on a montré un seul moteur M pour entraîner les deux roues 14 et 16 du deuxième essieu du véhicule. Bien entendu, on peut utiliser davantage de moteurs hydrauliques d'assistance, par exemple un moteur pour chaque roue du deuxième essieu, auquel cas les différents moteurs utilisés sont raccordés en parallèle, par des conduits principaux d'alimentation et d'échappement, aux sorties principales 19 et 21 de la pompe P respectivement.

Le circuit comporte également une pompe de gavage PG qui alimente en fluide un conduit de gavage 24, lui-même raccordé aux conduits principaux 18 et 20 par une ligne de gavage comprenant un conduit de raccordement au gavage 25 et des clapets anti-retour 23 qui permettent la circulation de fluide seulement dans le sens du gavage des conduits 18 et 20.

Lorsque la pompe de gavage fonctionne et lorsque les conduits 18 et 20 sont isolés du réservoir R, ces conduits sont maintenus à une pression au moins égale à la pression de gavage, supérieure à la pression du réservoir de retour de fluide. Classiquement, ce réservoir est mis à la pression atmosphérique ou à une pression voisine, tandis que la pression délivrée par la pompe de gavage est de l'ordre de 20 bar.

Les pompes P et P_{G} sont raccordées à des moyens d'entraînement qui permettent de les entraîner pour qu'elles génèrent une circulation de fluide. Classiquement, de tels moyens d'entraînement comprennent un arbre d'entraînement et un moteur auxiliaire, en général un moteur thermique. Dans l'exemple représenté, on a choisi de tirer profit du moteur de la transmission principale T pour assurer l'entraînement des pompes P et P_{G}. En effet, la pompe P est attelée à un arbre d'entraînement 26, lui-même susceptible d'être raccordé à un arbre 27 de sortie de la transmission T par d'un système d'embrayage 28. De même, la pompe P_{G} est attelée à un arbre d'entraînement 30, lui-même susceptible d'être attelé à un arbre de sortie 31 de la transmission principale T par l'intermédiaire d'un autre système d'embrayage 32.

Le circuit comporte encore une première valve de sélection 34, qui est placée sur le conduit de retour de fuites et qui, dans sa première position représentée sur la figure 1, raccorde le conduit auxiliaire 22 au réservoir de retour de fluide R tout en isolant ce conduit auxiliaire d'un conduit de servitude 36 et qui, dans sa deuxième position, raccorde le conduit auxiliaire 22 au conduit de servitude 36 tout en isolant ledit conduit auxiliaire 22 du réservoir R. Le circuit comporte en effet un conduit de servitude 36 qui est raccordé en permanence au conduit de gavage 24, en un noeud N1. En aval de ce noeud N1 dans le sens de la circulation de fluide, le conduit de raccordement au gavage 25 présente un clapet anti-retour taré 40. Le conduit de gavage comporte également des moyens pour limiter la pression dans la ligne de gavage qui comprennent une soupape de limitation de la pression 42.

On a en outre indiqué un réservoir A d'accumulation de fluide sous pression, dont on précisera la fonction plus loin.

Le circuit comporte encore une deuxième valve de sélection 44, qui est disposée sur des conduits 18' et 20', respectivement raccordés aux conduits 18 et 20 et qui est susceptible d'occuper trois positions. Dans sa première position, représentée sur la figure 1 et indiquée par le chiffre 1, cette valve 44 raccorde les deux conduits principaux 18 et 20 au réservoir de retour de fluide R. Dans sa deuxième position, indiquée par le chiffre 2, elle fait communiquer l'un avec l'autre les conduits principaux 18 et 20 tout en isolant ces conduits principaux du réservoir de retour de fluide. Enfin, dans sa troisième position, indiquée par le chiffre 3, elle isole les conduits principaux 18 et 20 l'un de l'autre et les isole également du réservoir de retour de fluide R.

Le schéma de la figure 1 montre encore une unité de commande U qui sert à gérer le passage par les différentes phases successives de la séquence. En particulier, cette unité de commande U permet de commander les moyens de commande des valves commandées 34 et 44 indiquées précédemment. En effet, la valve 34 est commandée entre sa première et sa deuxième position par des moyens de commande Z1, tandis que la valve 44 est commandée de manière à être placée dans sa position 2 par des moyens de commande Z2 et de manière à être placée dans sa position 3 par des moyens de commande Z3.

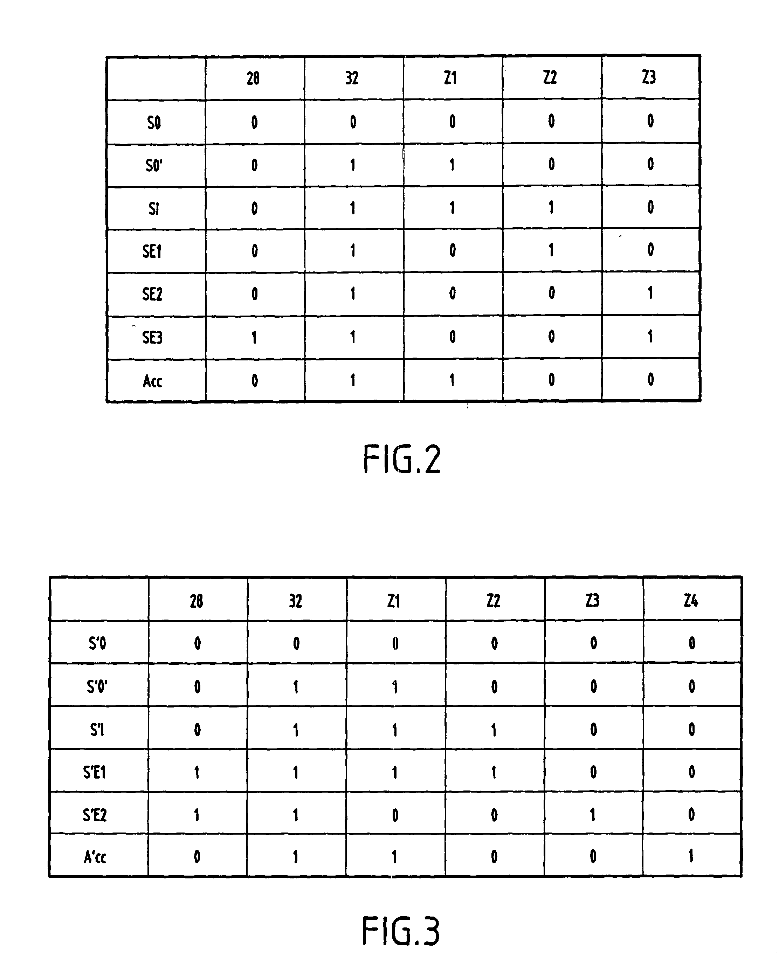

Les figures 2 et 3 montrent des tables de vérité qui permettent de mieux comprendre les séquences conformes à l'invention, selon une première et une deuxième variante. On a indiqué sur ces tables les différents organes qui sont activés pour la mise en oeuvre de ces séquences.

Il s'agit de l'embrayage 28 qui permet d'entraîner la pompe P, de l'embrayage 32 qui permet d'entraîner la pompe P_{G} et des commandes pneumatiques Z1, Z2 et Z3 qui commandent les valves 34 et 44. L'état dans lequel l'un des éléments précités n'est pas sollicité est indiqué par le chiffre 0, tandis que l'état dans lequel cet élément est sollicité est indiqué par le chiffre 1.

On considère en outre que, lorsque la commande pneumatique Z1 n'est pas sollicitée, la valve 34 occupe sa première position indiquée sur la figure 1, tandis qu'elle occupe sa deuxième position lorsque la commande Z1 est sollicitée.

On considère encore que la valve 44 occupe sa position 1 lorsque Z2 et Z3 sont à 0, tandis qu'elle occupe sa position 2 lorsque Z2 est à 1, tandis que Z3 est à 0 et qu'elle occupe sa position 3 lorsque Z3 est à 1, tandis que Z2 est à 0.

La convention indiquée ci-dessus est destinée à mieux comprendre les tables de vérité des figures 2 et 3. Elle peut toutefois ne pas exactement correspondre à la réalité des manoeuvres des différentes commandes. Ainsi, sur certains types de valves à trois positions pour la valve 44, on peut avoir intérêt à garder Z2 activé pour activer Z3.

Sur ces figures, on a fait figurer horizontalement les différents états par lesquels passe le dispositif entre la configuration de roue libre du moteur hydraulique d'assistance et sa configuration de travail.

On décrit tout d'abord la première variante en référence à la figure 2. Si les moyens choisis pour désactiver les pistons du moteur en les rentrant dans leurs cylindres respectifs sont des moyens mécaniques tels que des ressorts de rappel élastiques, la configuration de roue libre du moteur correspond à l'état S0, dans lequel tous les éléments 28, 32, Z1, Z2 et Z3 sont à 0. Si, en revanche, les pistons sont maintenus rentrés dans les cylindres sous l'effet d'une pression de fluide régnant à l'intérieur du carter, la configuration de roue libre correspond à l'état S0', dans lequel le conduit de retour de fuite 22 est utilisé pour maintenir une pression de fluide suffisamment importante autour des pistons, dans le carter. A cette occasion, il est bien entendu préférable d'utiliser le conduit de servitude 36 et la pression délivrée par la pompe de gavage P_{G} pour obtenir cette pression. Par conséquent, dans l'état S0', l'embrayage 32 est à 1 pour entraîner la pompe de gavage P_{G} et la commande Z1 est à 1 pour raccorder le conduit 22 au conduit 36.

L'unité de commande U est raccordée aux éléments 28, 32, Z1, Z2 et Z3 par des lignes de commande, respectivement L28, L32, LZ1, LZ2 et LZ3, tandis qu'elle est sollicitée par une ligne d'ordre de commande LC. Lorsqu'elle reçoit l'ordre de passage en mode d'assistance par cette ligne LC, l'unité de commande U sollicite les différents organes 28, 32, Z1, Z2 et Z3 de manière à exécuter la séquence de passage en configuration de travail du moteur.

Selon la variante de la figure 2, à partir de la configuration de roue libre correspondant à l'état S0 ou S0', cette séquence comprend une phase d'initialisation SI. Lorsque cette phase SI est réalisée, la pression de servitude règne à l'intérieur du carter du moteur, cette pression étant obtenue par la sollicitation de l'embrayage 32 (pour activer la pompe de gavage P_{G}) et de la commande Z1, tandis que les conduits principaux d'alimentation et d'échappement 18 et 20 sont raccordés entre eux et isolés du réservoir R par la sollicitation de la commande Z2. Ce faisant, on place ces conduites principales 18 et 20 à une même pression de remplissage, qui est inférieure à la pression de servitude mais supérieure à la pression du réservoir de retour de fluide. Par exemple, la pression de servitude peut être de l'ordre de 20 bar, pour une pression de remplissage de l'ordre de 17 bar.

Cette différence de pression est par exemple obtenue par le clapet taré 40 situé sur le conduit de raccordement au gavage 25 et n'autorisant la circulation de fluide que dans le sens allant du noeud N1 vers le conduit 25. Le ressort de rappel de ce clapet est par exemple taré pour entretenir une différence de pression donnée, par exemple de l'ordre de 3 bar entre les conduits 25 et 36.

Après la phase d'initialisation, la séquence comprend une phase d'embrayage à l'issue de laquelle, dans l'état SE3, le conduit auxiliaire 22 est en communication avec le réservoir de retour de fluide R, c'est-à-dire que la commande Z1 est à 0, tandis que les conduits principaux d'alimentation et d'échappement 18 et 20 sont isolés l'un de l'autre et isolés du réservoir R, c'est-à-dire que la commande Z3 est à 1. En outre, sur la figure 2, les embrayages 28 et 32 sont à 1 dans l'état SE3, ce qui signifie que le moteur M est embrayé et normalement alimenté par la pompe P, la pompe P_{G} assurant le gavage.

Plus précisément, dans la première variante illustrée sur la figure 2, la phase d'embrayage comprend une première étape à l'issue de laquelle le système se trouve dans l'état SE1, au cours de laquelle la commande Z1 est mise à 0 pour raccorder le conduit auxiliaire 22 au réservoir R, tandis que l'embrayage 32 et la commande Z2 restent à 1, l'embrayage 28 restant à 0. La phase d'embrayage comprend ensuite une deuxième étape à l'issue de laquelle on obtient l'état SE2, au cours de laquelle les conduits principaux sont isolés l'un de l'autre, c'est-à-dire que la commande Z3 passe à 1, tandis que la commande Z2 passe à 0, et au cours de laquelle les premiers moyens d'entraînement restent inactifs, c'est-à-dire que l'embrayage 28 reste à 0. Dans cette étape SE2, l'embrayage 32 et la commande Z1 restent respectivement à 1 et à 0.

La phase d'embrayage comporte ensuite une troisième étape au cours de laquelle la pompe P est activée, c'est-à-dire que l'embrayage 28 passe à 1, tandis que les commandes des autres éléments restent inchangées par rapport à l'état SE2.

La figure 3 montre une table de vérité illustrant une autre variante, dans laquelle la phase d'embrayage est légèrement différente de celle de la figure 2. Sur la figure 3, les états S'0 et S'0' de la configuration de roue libre sont respectivement analogues aux états S0 et S0' de la figure 2. De même, l'état S'I à la fin de la phase d'initialisation est analogue à l'état SI de la figure 2.

Dans la variante selon la figure 3, la phase d'embrayage comprend une première étape (état S'E1) au cours de laquelle la pompe P est activée, c'est-à-dire que l'embrayage 28 passe à 1, tandis que la commande Z1 reste à 1, c'est-à-dire que le conduit auxiliaire 22 reste isolé du réservoir R. Ceci, conjointement au fait que l'embrayage 32 reste à l'état 1, permet de maintenir la pression de servitude dans le carter du moteur.

Dans cette première étape de la phase d'embrayage, la commande Z2 reste à 1, de sorte que les conduits principaux 18 et 20 sont en communication mutuelle. Ainsi, ces conduits restent à la même pression de remplissage, inférieure à la pression de servitude, mais l'entraînement de la pompe P permet d'entretenir, dans les conduits principaux 18 et 20, une circulation de fluide dans le sens allant, à travers le moteur, du conduit d'alimentation vers le conduit d'échappement. Il en résulte que, lorsque l'on terminera la phase d'embrayage en permettant aux pistons de sortir de leurs cylindres, cette circulation générera un apport de fluide qui augmentera la vitesse de passage des pistons de leur configuration rentrée à leur configuration sortie, en contact avec la came.

Après ce premier état S'E1, la phase d'embrayage comprend une deuxième étape (état S'E2) au cours de laquelle la commande Z1 passe à 0 pour mettre le conduit auxiliaire en communication avec le réservoir R et au cours de laquelle la commande Z3 passe à 1, tandis que la commande Z2 passe à 0, pour isoler l'un de l'autre les conduits principaux 18 et 20. La situation dans l'état S'E2, à la fin de cette deuxième étape correspond à celle de l'état SE3 de la figure 2. De préférence, ces deux opérations, de mise en communication du conduit auxiliaire avec le réservoir R et d'isolement relatif des conduits 18 et 20, sont simultanées au cours de la deuxième étape.

Selon cette deuxième variante, la pompe principale P est entraînée par activation de l'embrayage 28 avant même que le moteur hydraulique M ne fournisse un couple moteur ou résistant (état S'E1). L'embrayage 28 peut être dimensionné en conséquence et être plus petit et moins coûteux que dans la variante de la figure 2.

Les pompes P et P_{G} ne sont pas mises en oeuvre au même moment de la séquence. Il en résulte que ces pompes doivent être entraînées indépendamment l'une de l'autre, ce qui signifie que les embrayages 28 et 32 doivent pouvoir être actionnés indépendamment, respectivement par la ligne L28 et par la ligne L32. On pourrait imaginer que la pompe P soit entraînée par un moteur thermique spécifique et que la pompe P_{G} soit entraînée par un autre moteur thermique spécifique, auquel cas ces deux moteurs seraient sollicités indépendamment l'un de l'autre. Toutefois, il est avantageux d'utiliser, pour l'entraînement de ces deux pompes, le moteur thermique de la transmission mécanique principale qui est présent sur le véhicule.

Dans la variante de la figure 2, il est avantageux d'utiliser un réservoir d'accumulation de fluide sous pression tel qu'indiqué par la référence A sur la figure 1. Ce réservoir A peut être alimenté par le circuit de gavage, par l'intermédiaire d'un conduit de raccordement 27. Ainsi, lorsque l'embrayage 32 est activé, ce réservoir A peut accumuler un volume de fluide à la pression de gavage. Dans ces conditions, dès que le conduit auxiliaire 22 sera raccordé au réservoir R le volume de fluide contenu dans ce réservoir A pourra être mis en circulation dans les conduits 18 et 20 pour augmenter le débit de fluide dans ces conduits, ce qui augmentera d'autant la vitesse de déplacement des pistons pour les mettre en contact avec la came.

L'unité de commande U gère le passage entre les différentes phases de la séquence et également la durée de ces différentes phases et de leurs étapes. Les durées de la phase d'initialisation et des étapes de la phase d'embrayage peuvent être très courtes, de l'ordre de quelques dixièmes de seconde, et être différentes les unes des autres, de telle sorte qu'on s'assure de ne passer d'une étape à l'étape suivante que lorsque les pressions dans les différents conduits sont optimales.

Par exemple, dans la variante de la figure 3, le passage à l'état S'E1 sera déclenché après un temps donné permettant, dans l'état S'1, aux conduits 18 et 20 d'être suffisamment alimentés par la pompe P_{G} pour parvenir à la pression de remplissage souhaitée. De même, le passage de l'état S'E1 à l'état S'E2 pourra être déclenché après un temps programmé, permettant à l'arbre d'entraînement 26 de la pompe P d'atteindre la vitesse de rotation de l'arbre 27, qui peut être la vitesse de l'arbre d'entraînement de la transmission principale, c'est-à-dire qui correspond à la vitesse d'entraînement des roues 10 et 12.

On pourra adjoindre au dispositif de l'invention une sécurité permettant le passage de la configuration de roue libre à la configuration de travail seulement lorsque le véhicule se déplace à une vitesse suffisamment peu élevée. Par exemple, grâce à l'invention, on peut placer le moteur hydraulique en configuration de travail alors que le rotor de ce moteur est entraîné par la roue qui lui est attelée à une vitesse de l'ordre de 150 tr/min ce qui, selon le dimensionnement du moteur, peut correspondre à une vitesse de déplacement du véhicule de l'ordre de 30 km/h. On choisira par exemple une pompe P capable de délivrer un fluide à une pression de travail de l'ordre de 300 bar, tandis que la pompe de gavage P_{G} pourra délivrer un fluide à une pression de l'ordre de 20 bar dans la conduite 24 ce qui, dans la conduite 25, correspondra par exemple à une pression de l'ordre de 17 bar compte tenu de la pression de tarage du clapet 40.

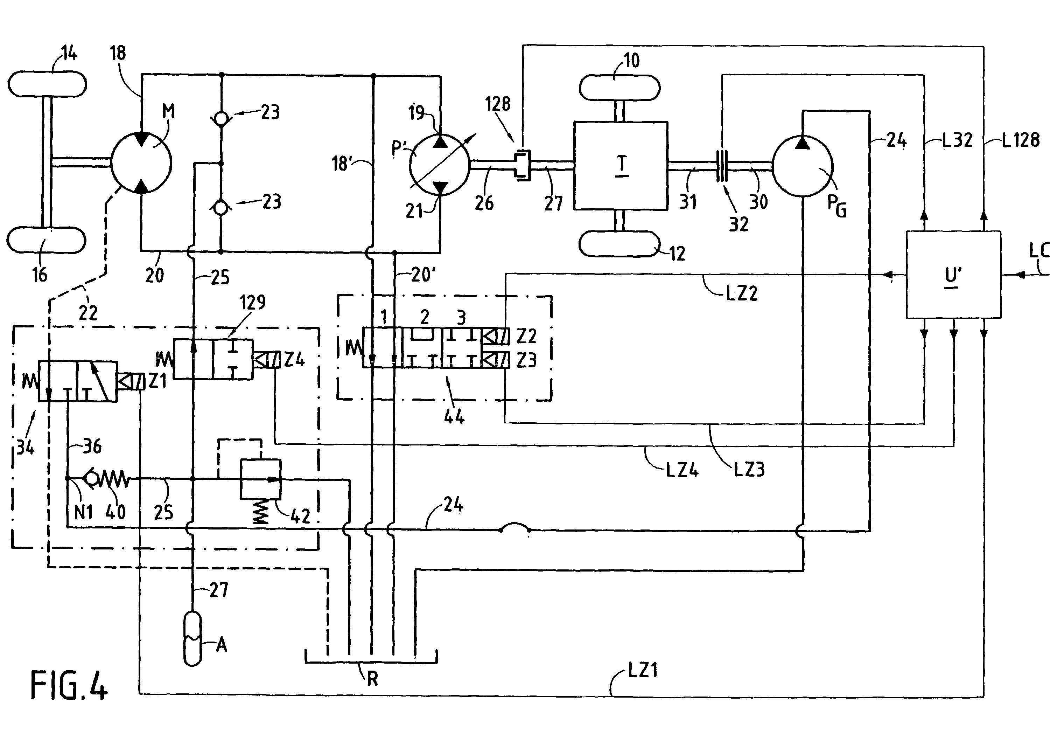

Le schéma de la figure 4 est analogue à celui de la figure 1, à ceci près que l'embrayage 28, qui était un embrayage progressif du type à friction, est remplacé par un embrayage 128 du type crabot. De plus, le circuit comprend une valve commandée additionnelle 129, qui est disposée sur le conduit de raccordement au gavage 25, en aval du clapet taré 40. Par ailleurs, la pompe P est remplacée par une pompe P' à débit variable. L'unité de commande U' est analogue à l'unité de commande U de la figure 1 à ceci près qu'elle gère, en plus, la commande Z4 de la valve 129 par la ligne LZ4.

L'utilisation du crabot 128 permet de débrayer l'entraînement de la pompe principale P' très rapidement lorsque l'assistance hydraulique cesse d'être nécessaire et que l'on souhaite revenir rapidement un entraînement assuré seulement par la transmission T.

La valve 129 peut occuper une première position, représentée sur la figure 4, dans laquelle elle raccorde les conduits principaux 18 et 20 à la pompe de gavage P_{G}, ainsi qu'une deuxième position dans laquelle elle isole ces conduits de la pompe de gavage P_{G}. La valve 129 est commandée entre ses deux positions par des moyens de commande Z4, par exemple pneumatiques.

La commande Z4 reste à 0, c'est-à-dire que la valve 129 occupe sa première position, tant que la transmission T seule est utilisée et que le moteur M reste en configuration de roue libre. De même, elle reste à 0 durant la séquence de passage de la configuration de roue libre à la configuration de travail, telle qu'illustrée par la figure 2 ou la figure 3.

La valve 129 trouve son utilité pendant la phase de désactivation du moteur M (passage de la configuration de travail à la configuration de roue libre) lorsque l'on souhaite désactiver rapidement l'assistance hydraulique. En effet, à partir des états SE3 ou S'E2 des figures 2 ou 3, on retrouvera de façon stable l'état de roue libre en revenant par exemple à l'état S0 ou S'0. Toutefois, pour faire plus rapidement rentrer les pistons dans leurs cylindres respectifs, on pourra choisir, à partir de l'état SE3 ou S'E2, de faire passer l'embrayage 28 ou 128 à 0 et de mettre Z3 à 0 (Z2 reste à 0), tout en plaçant momentanément (par exemple pendant 2s) Z1 à 1 et en conservant momentanément l'embrayage 32 à 1 pour faire régner une pression dans l'espace interne du carter. Durant le même laps de temps, Z4 est mis à 1 pour faire diminuer rapidement la pression dans les conduits de cylindres.

Cette phase de rentrée accélérée des pistons est illustrée à la ligne A'cc de la table de vérité de la figure 3.

Il faut noter que, même en l'absence de la valve 129, comme sur la figure 1, on peut accélérer le mouvement de rentrée des pistons dans leurs conduits de cylindres comme illustré à la ligne Acc de la table de vérité de la figure 2. Dans ce cas, à partir de l'état SE3, on fait passer l'embrayage 28 à 0 et on place Z3 à 0 (Z2 reste à 0), tout en plaçant momentanément (par exemple pendant 2s) Z1 à 1 et en conservant momentanément l'embrayage 32 à 1 pour faire régner une pression dans l'espace interne du carter. Dans ce cas, la pression dans les conduits de cylindres reste la pression de gavage durant cette phase de désactivation.

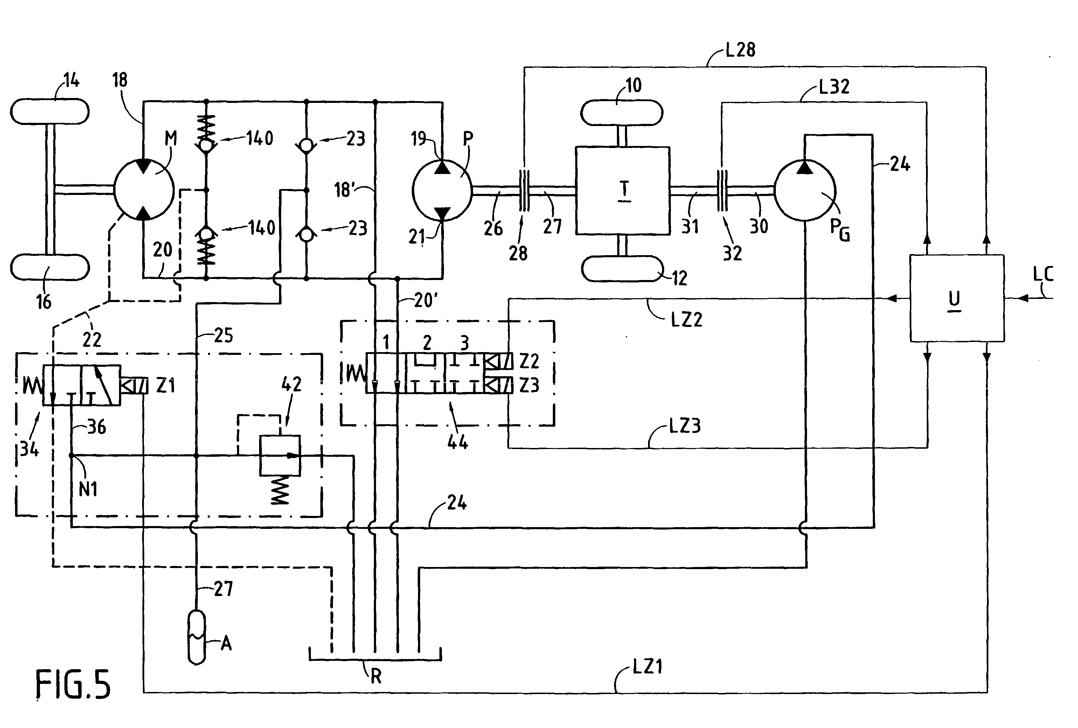

La figure 5 montre une variante, qui diffère du circuit de la figure 1 par la position des moyens permettant d'obtenir la différence entre la pression de remplissage des conduits 18 et 20, et la pression de servitude dans le conduit 36.

Ces moyens comprennent au moins un clapet taré anti-retour 140, qui est analogue au clapet 40, mais qui est placé entre le conduit auxiliaire 22 et celui des conduits principaux 18 et 20 qui se trouve à la basse pression dans le sens préférentiel de fonctionnement (marche avant) du moteur M, ce clapet 140 autorisant seulement la circulation de fluide dans le sens allant du conduit 22 vers ledit conduit principal.

De préférence, on prévoit deux clapets tarés 140, respectivement placés entre les conduits 22 et 18 et entre les conduits 22 et 20, ces clapets remplissant leur rôle, l'un dans un sens de fonctionnement du moteur, l'autre dans l'autre sens.

Bien entendu, cette variante illustrée par la figure 5 peut être transposée au circuit de la figure 4.

Lors de la phase d'initialisation, le ou les clapets 140 jouent le même rôle que le clapet 40 des figures 1 et 4 en maintenant la pression de remplissage à une valeur inférieure à la pression de servitude. Ainsi, on pourrait utiliser la séquence de la figure 2 avec le circuit de la figure 5 ou celle de la figure 3 avec le circuit de la figure 5 modifié pour comprendre la valve 129.

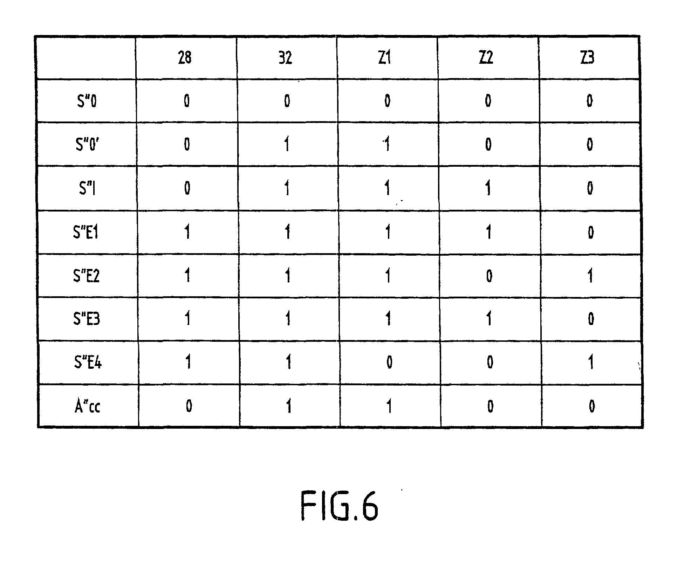

Toutefois, il est avantageux de choisir la séquence illustrée par la figure 6. Sur cette figure, les états S"O, S"O', S"I et S"E1 sont analogues aux états S'O, S'O', S'I et S'E1 de la figure 3, à ceci près que la commande Z4 n'est pas représentée sur la figure 6.

L'état S"E1 est suivi par un état S"E2, dans lequel la commande Z1 reste à la valeur 1 (le conduit auxiliaire 22 reste isolé du réservoir R), tandis que les commandes Z2 et Z3 passent respectivement aux valeurs 0 et 1 (la valve 44 passe dans sa position 3). Les conduits principaux 18 et 20 sont alors isolés et la pression dans celui des conduits principaux, par exemple 18, qui est raccordé au refoulement de la pompe P devient supérieure à la pression de servitude. La pression dans l'autre des conduits principaux, par exemple 20, qui est raccordé au refoulement du moteur devient aussi supérieure à la pression de servitude par le débit du fluide refoulé par le moteur qui s'ajoute au débit de fluide de gavage. De ce fait, les pistons du moteur dont les cylindres sont raccordés à ce conduit principal à la haute pression sont mis en contact avec la came. Le trop plein de fluide du carter correspondant à la sortie de ces pistons est alors évacué, par un clapet 140, vers celui des conduits principaux, par exemple 20 qui, étant relié à l'aspiration de la pompe P, se trouve à la basse pression. A ce moment, le moteur M fonctionne comme une pompe puisqu'il alimente en fluide la pompe P qui fonctionne quant à elle comme un moteur. Ceci favorise la montée en vitesse de la pompe P, de sorte que l'embrayage 28 est moins sollicité que dans le cas de la figure 3.

Cet état S"E2 est la cause d'une brusque augmentation de pression dans le conduit principal à la haute pression. Pour éviter une pointe de pression excessive dans ce conduit, l'état S"E2 est rapidement abandonné au profit de l'état S"E3 qui est identique à l'état S"E1. La pointe de pression est en effet enrayée par la mise en communication des conduits 18 et 20.

L'état S"E4, identique à l'état S'E2 est alors adopté. Par rapport à l'état S'E2, il présente l'avantage d'être activé alors que les pistons du moteur sont déjà en contact avec la came. Le passage par les états S"E2 et S"E3 permet de réduire la sollicitation de l'embrayage 28.

Cette séquence peut être adaptée à un circuit correspondant à celui de la figure 5, modifié pour inclure la valve 129. Dans ce cas, la commande Z4 est mise à 1 seulement dans la phase de rentrée accélérée des pistons A"cc, qui correspond à la phase A'cc de la figure 3.

## Revendications

1. Dispositif d'assistance motrice pour un véhicule ayant une transmission principale mécanique (T) apte à entraîner des organes de déplacement (10, 12) du véhicule, le dispositif comprenant une source principale de fluide sous pression susceptible d'être entraînée par des premiers moyens d'entraînement (26, 27, 28, T ; 128) pour délivrer du fluide sous pression et au moins un moteur hydraulique (M) susceptible d'être alimenté en fluide sous pression par la source principale de fluide (P ; P') pour entraîner au moins un organe de déplacement (14, 16) du véhicule, ce moteur ayant un stator et un rotor susceptible de tourner par rapport au stator autour d'un axe de rotation, le moteur comprenant un bloc-cylindres qui appartient à un premier des deux éléments constitués par le stator et le rotor, qui est disposé à l'intérieur d'un carter et qui présente une pluralité d'ensembles de cylindres et de pistons disposés radialement par rapport à l'axe de rotation, ainsi qu'un organe de réaction pour les pistons qui appartient au deuxième desdits deux éléments, le moteur présentant, en outre, un conduit principal d'alimentation de fluide et un conduit principal d'échappement de fluide (18, 20) susceptibles d'être mis en communication avec les cylindres, ainsi qu'un conduit auxiliaire (22) raccordé à un espace interne ménagé à l'intérieur du carter autour du bloc-cylindres et susceptible d'être mis en communication avec un réservoir de retour de fluide (R), le moteur étant susceptible d'adopter une configuration de travail, dans laquelle les pistons coopèrent avec l'organe de réaction et sont susceptibles de générer un couple de sortie sous l'effet du fluide délivré par la source principale de fluide, ainsi qu'une configuration dite de roue libre, dans laquelle les pistons sont maintenus en position rentrée à l'intérieur des cylindres de telle sorte que le rotor est libre de tourner par rapport au stator sans générer de couple de sortie,
**caractérisé en ce qu'**il comprend des moyens (U, U', 28, 32, Z1, Z2, Z3) pour réaliser les phases successives d'une séquence de passage du moteur (M) de sa configuration de roue libre dans sa configuration de travail, cette séquence comprenant une phase d'initialisation (SI, S'l) dans laquelle le conduit auxiliaire (22) est isolé du réservoir de retour de fluide (R) et raccordé à un conduit dit de servitude (36), alimenté en fluide sous pression de telle sorte qu'une pression de fluide dite pression de servitude règne dans l'espace interne du carter et dans laquelle les conduits principaux d'alimentation et d'échappement (18, 20) sont placés à une même pression dite pression de remplissage, qui est inférieure à la pression de servitude mais supérieure à la pression du réservoir de retour de fluide (R), la séquence comprenant, en outre, après la phase d'initialisation, une phase d'embrayage (SE1, SE2, SE3 ; S'E1, S'E2 ; S"E1, S"E2, S"E3, S"E4) au cours de laquelle le conduit auxiliaire (22) est mis en communication avec le réservoir de retour de fluide (R) et au cours de laquelle les conduits principaux d'alimentation et d'échappement (18, 20) sont isolés l'un de l'autre.

2. Dispositif selon la revendication 1, **caractérisé en ce que**, au cours de la phase d'embrayage, les conduits principaux (18, 20) sont isolés l'un de l'autre seulement après que le conduit auxiliaire (22) a été mis en communication avec le réservoir de retour de fluide.

3. Dispositif selon la revendication 2, **caractérisé en ce que** la phase d'embrayage comprend une première étape (SE1) au cours de laquelle le conduit auxiliaire (22) est mis en communication avec le réservoir de retour de fluide (R) alors que les conduits principaux (18, 20) restent à la pression de remplissage, suivie par une deuxième étape (SE2) au cours de laquelle lesdits conduits principaux (18, 20) sont isolés l'un de l'autre alors que les premiers moyens d'entraînement (28 ; 128) sont inactifs, et par une troisième étape (SE3) au cours de laquelle lesdits premiers moyens d'entraînement (28 ; 128) sont activés de manière à entraîner la source principale de fluide sous pression (P).

4. Dispositif selon la revendication 2, **caractérisé en ce que** la phase d'embrayage comprend une première étape (S'E1) au cours de laquelle les premiers moyens d'entraînement (28 ; 128) sont activés de manière à entraîner la source principale de fluide sous pression (P ; P') alors que le conduit auxiliaire (22) reste isolé du réservoir de retour de fluide (R), suivie par une deuxième étape (S'E2) au cours de laquelle le conduit auxiliaire (22) est mis en communication avec le réservoir de retour de fluide (R) et au cours de laquelle les conduits principaux (18, 20) sont isolés l'un de l'autre.

5. Dispositif selon la revendication 1, **caractérisé en ce que** la phase d'embrayage comprend une première étape (S"E1) au cours de laquelle les premiers moyens d'entraînement (28, 128) sont activés de manière à entraîner la source principale de fluide sous pression (P, P') alors que le conduit auxiliaire (22) reste isolé du réservoir de retour de fluide (R), suivie par une étape intermédiaire (S"E2, S"E3) au cours de laquelle les conduits principaux (18, 20) sont momentanément isolés l'un de l'autre (S"E2), puis à nouveau momentanément raccordés l'un à l'autre (S"E3), et par une étape finale (S"E4) au cours de laquelle le conduit auxiliaire (22) est mis en communication avec le réservoir de retour de fluide (R) et au cours de laquelle les conduits principaux (18, 20) sont isolés l'un de l'autre.

6. Dispositif selon l'une quelconque des revendications 1 à 5, **caractérisé en ce que** les moyens pour réaliser les phases successives de la séquence de passage du moteur de sa configuration de roue libre dans sa configuration de travail comprennent des valves (34, 44) commandées par des moyens de commande (Z1, Z2, Z3) mis en oeuvre par une unité de commande (U).

7. Dispositif selon la revendication 6, **caractérisé en ce que** les moyens de commande des valves (34, 44) sont des moyens pneumatiques (Z1, Z2, Z3).

8. Dispositif selon l'une quelconque des revendications 1 à 7, **caractérisé en ce que** les premiers moyens d'entraînement comprennent un arbre d'entraînement (26, 27) susceptible (28 ; 128) d'être mécaniquement lié à la transmission mécanique (T).

9. Dispositif selon l'une quelconque des revendications 1 à 8, **caractérisé en ce que** la pression de servitude est fournie par une source auxiliaire de fluide sous pression (P_{G}) à laquelle est raccordé le conduit de servitude, ladite source auxiliaire de fluide étant susceptible d'être entraînée par des deuxièmes moyens d'entraînement (30, 31, 32, T) indépendamment de la source principale de fluide sous pression (P ; P') pour délivrer du fluide sous pression.

10. Dispositif selon la revendication 9, **caractérisé en ce que** les conduits principaux (18, 20) sont raccordés à un conduit de gavage (24), lui même raccordé à la source auxiliaire de fluide (P_{G}), de telle sorte que la pression de remplissage est fournie par ladite source auxiliaire de fluide.

11. Dispositif selon la revendication 10, **caractérisé en ce qu'**il comporte un clapet taré (40) qui est disposé sur un conduit de raccordement au gavage (25).

12. Dispositif selon la revendication 10, **caractérisé en ce qu'**il comporte au moins un clapet taré (140) qui est disposé entre le conduit auxiliaire (22) et le conduit principal (18 ou 20) destiné à se trouver à la basse pression.

13. Dispositif selon l'une quelconque des revendications 9 et 12, **caractérisé en ce qu'**il comporte une valve de limitation de la pression (42) raccordée au conduit de gavage (24).

14. Dispositif selon l'une quelconque des revendications 1 à 13, **caractérisé en ce qu'**il comporte une première valve de sélection (34) susceptible d'adopter une première position dans laquelle elle raccorde le conduit auxiliaire (22) au réservoir de retour de fluide (R) tout en isolant ledit conduit auxiliaire du conduit de servitude (36), ainsi qu'une deuxième position dans laquelle elle raccorde ce conduit auxiliaire (22) au conduit de servitude (36) tout en isolant ledit conduit auxiliaire du réservoir de retour de fluide (R).

15. Dispositif selon l'une quelconque des revendications 1 à 14, **caractérisé en ce qu'**il comporte un réservoir (A) d'accumulation de fluide sous pression susceptible d'être raccordé aux conduits principaux au moins dans la phase d'initialisation.

16. Dispositif selon l'une quelconque des revendications 1 à 15, **caractérisé en ce qu'**il comporte une deuxième valve de sélection (44) susceptible d'adopter une première position (1) dans laquelle elle raccorde les deux conduits principaux (18, 20) au réservoir de retour de fluide (R), une deuxième position (2) dans laquelle elle fait communiquer ensemble les conduits principaux (18, 20) tout en isolant lesdits conduits principaux du réservoir de retour de fluide, et une troisième position (3) dans laquelle elle isole les conduits principaux (18, 20) l'un par rapport à l'autre et par rapport au réservoir de retour de fluide (R).

17. Dispositif selon l'une quelconque des revendications 1 à 16, **caractérisé en ce qu'**il comporte des moyens pour commander le passage du moteur (M) de sa configuration de travail à sa configuration de roue libre, aptes à réaliser une phase de désactivation dans laquelle les premiers moyens d'entraînement sont inactifs, dans laquelle le conduit auxiliaire (22) est isolé du réservoir de retour de fluide (R) et raccordé au conduit de servitude (36) qui est alimenté en fluide sous pression et dans laquelle les conduits principaux (18, 20) sont mis en communication avec le réservoir de retour de fluide (R).

18. Dispositif selon la revendication 17, comprenant une source de fluide de gavage (P_{G}) destinée à maintenir une pression de gavage dans les conduits principaux (18, 20), **caractérisé en ce qu'**il comporte une valve de désactivation (129) susceptible, lors du passage du moteur (M) de sa configuration de travail à sa configuration de roue libre, d'adopter, pendant la phase de désactivation, un état transitoire dans lequel elle isole les conduits principaux de la source de gavage (P_{G}).

## Patentansprüche

1. Vorrichtung zur Antriebsunterstützung für ein Fahrzeug mit einer mechanischen Hauptkraftübertragung (T), die Fahrorgane (10, 12) des Fahrzeugs anzutreiben vermag, wobei die Vorrichtung eine Druckflüssigkeitshauptquelle umfasst, die durch erste Antriebsmittel (26, 27, 28, T; 128) angetrieben zu werden vermag, um Druckflüssigkeit abzugeben, sowie wenigstens einen Hydraulikmotor (M), der durch die Flüssigkeitshauptquelle (P; P') mit Flüssigkeit gespeist zu werden vermag, um wenigstens ein Fahrorgan (14, 16) des Fahrzeugs anzutreiben, wobei der Motor einen Ständer und einen Rotor aufweist, der sich bezüglich des Ständers um eine Drehachse zu drehen vermag, wobei der Motor einen Zylinderblock, der einen ersten der zwei durch den Ständer und den Rotor gebildeten Elemente zugehörig und innen in einem Gehäuse angeordnet ist und eine Vielzahl von Einheiten aus Zylindern und Kolben aufweist, die bezüglich der Drehachse radial angeordnet sind, sowie ein dem zweiten der zwei Elemente zugehöriges Reaktionsorgan für die Kolben umfasst, wobei der Motor ferner eine Hauptleitung für den Flüssigkeitszulauf und eine Hauptleitung für den Flüssigkeitsablauf (18, 20) umfasst, die mit den Zylindern verbunden zu werden vermögen, sowie eine Nebenleitung (22), die mit einem innen im Gehäuse um den Zylinderblock ausgebildeten Innenraum verbunden ist und mit einem Flüssigkeitsrücklaufbehälter (R) verbunden zu werden vermag, wobei der Motor eine Arbeitskonfiguration einzunehmen vermag, in der die Kolben mit dem Reaktionsorgan zusammenwirken und unter der Wirkung der durch die Flüssigkeitshauptquelle abgegebenen Flüssigkeit ein Abtriebsmoment zu erzeugen vermögen, sowie eine sogenannte Freilaufkonfiguration, in der die Kolben in eingefahrener Stellung innen in den Zylindern gehalten werden, so dass sich der Rotor bezüglich des Ständers ungehindert drehen kann, ohne das Abtriebsmoment zu beeinträchtigen,
**dadurch gekennzeichnet, dass** sie Mittel (U, U', 28, 32, Z1, Z2, Z3) zum Ausführen aufeinanderfolgender Phasen einer Sequenz umfasst, in der der Motor (M) von seiner Feilaufkonfiguration in seine Arbeitskonfiguration wechselt, wobei diese Sequenz eine Initialisierungsphase (SI,S'I) umfasst, in der die Nebenleitung (22) vom Flüssigkeitsrücklaufbehälter (R) getrennt und mit einer sogenannten Arbeitsleitung (36) verbunden ist, die mit Druckflüssigkeit gespeist wird, so dass im Innenraum des Gehäuses ein als Arbeitsdruck bezeichneter Flüssigkeitsdruck herrscht, und in der die Hauptzulauf- und -ablaufleitung (18, 20) auf einen gleichen, als Fülldruck bezeichneten Druck gebracht werden, der niedriger ist als der Arbeitsdruck, aber höher als der Druck des Flüssigkeitsrücklaufbehälters (R), und wobei die Sequenz zudem nach der Initialisierungsphase eine Kupplungsphase (SE1, SE2, SE3; S'E1, S'E2; S"E1, S"E2, S"E3, S"E4) umfasst, in deren Verlauf eine Verbindung zwischen der Nebenleitung (22) und dem Flüssigkeitsrücklaufbehälter (R) hergestellt wird und in deren Verlauf die Hauptzulauf- und -ablaufleitungen (18, 20) voneinander getrennt sind.

2. Vorrichtung nach Anspruch 1,
**dadurch gekennzeichnet, dass** im Verlauf der Kupplungsphase die Hauptleitungen (18, 20) erst dann voneinander getrennt sind, wenn eine Verbindung zwischen der Nebenleitung (22) und dem Flüssigkeitsrücklaufbehälter hergestellt ist.

3. Vorrichtung nach Anspruch 2,
**dadurch gekennzeichnet, dass** die Kupplungsphase einen ersten Schritt (SE1) umfasst, in dessen Verlauf eine Verbindung zwischen der Nebenleitung (22) und dem Flüssigkeitsrücklaufbehälter (R) hergestellt wird, während in den Hauptleitungen (18, 20) weiterhin der Fülldruck herrscht, und auf den ein zweiter Schritt (SE2) folgt, in dessen Verlauf die Hauptleitungen (18, 20) voneinander getrennt werden, während die ersten Antriebsmittel (28; 128) inaktiv sind, sowie ein dritter Schritt (SE3), in dessen Verlauf die ersten Antriebsmittel (28; 128) derart aktiviert werden, dass sie die Druckflüssigkeitshauptquelle (P) antreiben.

4. Vorrichtung nach Anspruch 2,
**dadurch gekennzeichnet, dass** die Kupplungsphase einen ersten Schritt (S'E1) umfasst, in dessen Verlauf die ersten Antriebsmittel (28; 128) derart aktiviert werden, dass sie die Druckflüssigkeitshauptquelle (P; P') antreiben, während die Nebenleitung (22) vom Flüssigkeitsrücklaufbehälter (R) getrennt bleibt, und auf den ein zweiter Schritt (S'E2) folgt, in dessen Verlauf eine Verbindung zwischen der Nebenleitung (22) und dem Flüssigkeitsrücklaufbehälter (R) hergestellt wird und in dessen Verlauf die Hauptleitungen (18, 20) voneinander getrennt sind.

5. Vorrichtung nach Anspruch 1,
**dadurch gekennzeichnet, dass** die Kupplungsphase einen ersten Schritt (S"E1) umfasst, in dessen Verlauf die ersten Antriebsmittel (28, 128) derart aktiviert werden, dass sie die Druckflüssigkeitshauptquelle (P, P') antreiben, während die Nebenleitung (22) vom Flüssigkeitsrücklaufbehälter (R) getrennt bleibt, und auf den ein Zwischenschritt (S"E2, S"E3) folgt, in dessen Verlauf die Hauptleitungen (18, 20) zeitweilig voneinander getrennt (S"E2) und zeitweilig wieder miteinander (S"E3) verbunden sind, sowie einen letzten Schritt (S"E4), in dessen Verlauf eine Verbindung zwischen der Nebenleitung (22) und dem Flüssigkeitsrücklaufbehälter (R) hergestellt wird und in dessen Verlauf die Hauptleitungen (18, 20) voneinander getrennt sind.

6. Vorrichtung nach einem der Ansprüche 1 bis 5,
**dadurch gekennzeichnet, dass** die Mittel zum Ausführen der aufeinanderfolgenden Phasen der Sequenz, in der der Motor von seiner Freilaufkonfiguration in seine Arbeitskonfiguration wechselt, Ventile (34, 44) umfassen, die durch Steuermittel (Z1, Z2, Z3) gesteuert werden, die durch eine Steuereinheit (U) betätigt werden.

7. Vorrichtung nach Anspruch 6,
**dadurch gekennzeichnet, dass** die Steuermittel der Ventile (34, 44) pneumatische Mittel (Z1, Z2, Z3) sind.

8. Vorrichtung nach einem der Ansprüche 1 bis 7,
**dadurch gekennzeichnet, dass** die ersten Antriebsmittel eine Antriebswelle (26, 27) umfassen, die mit der mechanischen Kraftübertragung (T) mechanisch verbunden zu sein vermag.

9. Vorrichtung nach einem der Ansprüche 1 bis 8,
**dadurch gekennzeichnet, dass** der Arbeitsdruck durch eine Druckflüssigkeitsnebenquelle (P_{G}) geliefert wird, an die die Arbeitsleitung angeschlossen ist, wobei die Druckflüssigkeitsnebenquelle durch die zweiten Antriebsmittel (30, 31, 32, T) unabhängig von der Druckflüssigkeitshauptquelle (P; P') angetrieben zu werden vermag, um Druckflüssigkeit abzugeben.

10. Vorrichtung nach Anspruch 9,
**dadurch gekennzeichnet, dass** die Hauptleitungen (18, 20) an eine Speiseleitung (24) angeschlossen sind, die ihrerseits an die Flüssigkeitsnebenquelle (P_{G}) angeschlossen ist, so dass der Fülldruck durch die Flüssigkeitsnebenquelle geliefert wird.

11. Vorrichtung nach Anspruch 10,
**dadurch gekennzeichnet, dass** sie ein geeichtes Rückschlagventil (40) umfasst, das an einer Leitung zur Verbindung mit der Speiseleitung (25) angeordnet ist.

12. Vorrichtung nach Anspruch 10,
**dadurch gekennzeichnet, dass** sie wenigstens ein geeichtes Rückschlagventil (140) umfasst, das zwischen der Nebenleitung (22) und der Hauptleitung (18 oder 20) angeordnet ist, die dazu bestimmt ist, einen geringen Druck aufzuweisen.

13. Vorrichtung nach einem der Ansprüche 9 oder 12,
**dadurch gekennzeichnet, dass** sie ein Druckbegrenzungsventil (42) umfasst, das an die Speiseleitung (24) angeschlossen ist.

14. Vorrichtung nach einem der Ansprüche 1 bis 13,
**dadurch gekennzeichnet, dass** sie ein erstes Selektionsventil (34) umfasst, das eine erste Position einzunehmen vermag, in der es die Nebenleitung (22) mit dem Flüssigkeitsrücklaufbehälter (R) verbindet, wobei die Nebenleitung von der Arbeitsleitung (36) getrennt ist, sowie eine zweite Position, in der es die Nebenleitung (22) mit der Arbeitsleitung (36) verbindet, wobei die Nebenleitung vom Flüssigkeitsrücklaufbehälter (R) getrennt ist.

15. Vorrichtung nach einem der Ansprüche 1 bis 14,
**dadurch gekennzeichnet, dass** sie einen Behälter (A) zum Speichern der Druckflüssigkeit umfasst, der zumindest in der Initialisierungsphase an die Hauptleitungen angeschlossen zu werden vermag.

16. Vorrichtung nach einem der Ansprüche 1 bis 15,
**dadurch gekennzeichnet, dass** sie ein zweites Selektionsventil (44) umfasst, das eine erste Position (1) einzunehmen vermag, in der es die zwei Hauptleitungen (18, 20) mit dem Flüssigkeitsrücklaufbehälter (R) verbindet, sowie eine zweite Position (2), in der es die Hauptleitungen (18, 20) miteinander verbindet, wobei die Hauptleitungen von dem Flüssigkeitsrücklaufbehälter getrennt sind, und eine dritte Position (3), in der es die Hauptleitungen (18, 20) voneinander und bezüglich des Flüssigkeitsrücklaufbehälters (R) trennt.

17. Vorrichtung nach einem der Ansprüche 1 bis 16,
**dadurch gekennzeichnet, dass** sie Mittel zum Steuern des Wechsels des Motors (M) von seiner Arbeitskonfiguration in seine Freilaufkonfiguration umfasst, die eine Deaktivierungsphase auszuführen vermögen, in der die ersten Antriebsmittel inaktiv sind, in der die Nebenleitung (22) vom Flüssigkeitsrücklaufbehälter (R) getrennt und mit der Arbeitsleitung (36) verbunden ist, welche mit Druckflüssigkeit gespeist wird, und in der eine Verbindung zwischen den Hauptleitungen (18, 20) und dem Flüssigkeitsrücklaufbehälter (R) hergestellt wird.

18. Vorrichtung nach Anspruch 17 mit einer Flüssigkeitsspeisequelle (P_{G}), die dazu bestimmt ist, einen Speisedruck in den Hauptleitungen (18, 20) aufrecht zu erhalten,
**dadurch gekennzeichnet, dass** sie ein Deaktivierungsventil (129) umfasst, das während der Deaktivierungsphase beim Wechsel des Motors (M) von seiner Arbeitskonfiguration in seine Freilaufkonfiguration einen Überganszustand einzunehmen vermag, in dem es die Hauptleitungen von der Speisequelle (P_{G}) trennt.

## Claims

1. Drive assistance apparatus for a vehicle having a mechanical main transmission (T) for driving displacement members (10, 12) of the vehicle, the apparatus comprising a main source of fluid under pressure suitable for being driven by first drive means (26, 27, 28, T; 128) to deliver fluid under pressure, and at least one hydraulic motor (M) suitable for being fed with fluid under pressure by the main source of fluid (P; P') to drive at least one displacement member (14, 16) of the vehicle, said motor having a stator and a rotor suitable for rotating relative to the stator about an axis of rotation, the motor comprising a cylinder block which belongs to a first one of the two elements constituted by the stator and the rotor, which is disposed inside a case, and which presents a plurality of cylinder-and-piston assemblies disposed radially relative to the axis of rotation, together with a reaction member for the pistons which belongs to the second one of said two elements, the motor also having a main fluid feed duct and a main fluid exhaust duct (18, 20) suitable for being put into communication with the cylinders, and an auxiliary duct (22) connected to an internal space provided inside the case around the cylinder block and suitable for being put into communication with a fluid return tank (R), the motor being suitable for adopting a "working" configuration in which the pistons cooperate with the reaction member and are suitable for generating outlet torque under the effect of the fluid delivered by the main fluid source, and also a "free-wheel" configuration in which the pistons are maintained in the retracted position inside their cylinders so that the rotor is free to rotate relative to the stator without generating any outlet torque,
the apparatus being **characterised in that** it comprises means (U, U', 28, 32, Z1, Z2, Z3) for performing the successive stages of a sequence for causing the motor (M) to pass from its free-wheel configuration into its working configuration, said sequence comprising an initialisation stage (SI, S'l) in which the auxiliary duct (22) is isolated from the fluid return tank (R) and is connected to a "service" duct (36) which is fed with fluid under pressure such that a "service" fluid pressure exists inside the internal space of the case, and in which the main feed and exhaust ducts (18, 20) are placed at a common "filling" pressure which is less than the service pressure but greater than the pressure of the fluid retum tank (R), the sequence further comprising, after the initialisation stage, a clutch engagement stage (SE1, SE2, SE3; S'E1, S'E2; S"E1, S"E2, S"E3, S"E4) during which the auxiliary duct (22) is put into communication with the fluid return tank (R) and during which the main feed and exhaust ducts (18, 20) are isolated from each other.

2. Apparatus according to claim 1, **characterised in that** during the clutch engagement stage, the main ducts (18, 20) are isolated from each other only after the auxiliary duct (22) has been put into communication with the fluid return tank.

3. Apparatus according to claim 2, **characterised in that** the clutch engagement stage comprises a first state (SE1) during which the auxiliary duct (22) is put into communication with the fluid return tank (R) while the main ducts (18, 20) remain at the filling pressure, followed by a second state (SE2) during which said main ducts (18, 20) are isolated from each other while the first drive means (28; 128) are inactive, and by a third state (SE3) during which said first drive means (28; 128) are activated so as to drive the main source of fluid under pressure (P).

4. Apparatus according to claim 2, **characterised in that** the clutch engagement stage comprises a first state (S'E1) during which the first drive means (28; 128) are activated so as to drive the main source of fluid under pressure (P; P') while the auxiliary duct (22) remains isolated from the fluid return tank (R), followed by a second state (S'E2) during which the auxiliary duct (22) is put into communication with the fluid return tank (R) and during which the main ducts (18, 20) are isolated from each other.

5. Apparatus according to claim 1, **characterised in that** the clutch engagement stage comprises a first state (S"E1) during which the first drive means (28, 128) are activated so as to drive the main source of fluid under pressure (P, P') while the auxiliary duct (22) remains isolated from the fluid return tank (R), followed by an intermediate state (S"E2, S"E3) during which the main ducts (18, 20) are momentarily isolated from each other (S"E2), and then momentarily reconnected to each other (S"E3), and by a final state (S"E4) during which the auxiliary duct (22) is put into communication with the fluid return tank (R) and during which the main ducts (18, 20) are isolated from each other.

6. Apparatus according to any one of claims 1 to 5, **characterised in that** the means for performing the successive stages of the sequence for causing the motor to pass from its free-wheel configuration to its working configuration comprise valves (34, 44) controlled by command means (Z1, Z2, Z3) themselves under the control of a control unit (U).

7. Apparatus according to claim 6, **characterised in that** the valve control means (34, 44) are pneumatic means (Z1, Z2, Z3).

8. Apparatus according to any one of claims 1 to 7, **characterised in that** the first drive means comprise a drive shaft (26, 27) suitable (28; 128) for being mechanically linked to the mechanical transmission (T).

9. Apparatus according to any one of claims 1 to 8, **characterised in that** the service pressure is delivered by an auxiliary source of fluid under pressure (P_{G}) to which the service duct is connected, said auxiliary source of fluid being suitable for being driven by second drive means (30, 31, 32, T) independently of the main source of fluid under pressure (P; P') to deliver fluid under pressure.

10. Apparatus according to claim 9, **characterised in that** the main ducts (18, 20) are connected to a booster duct (24) itself connected to the auxiliary source of fluid (P_{G}) so that the filling pressure is delivered by said auxiliary fluid source.

11. Apparatus according to claim 10, **characterised in that** it includes a rated valve (40) which is disposed on the booster connection duct (25).

12. Apparatus according to claim 10, **characterised in that** it includes at least one rated valve (140) which is connected between the auxiliary duct (22) and the main duct (18 or 20) that is to be found at low pressure.

13. Apparatus according to claim 9 or 12, **characterised in that** it includes a pressure limiting valve (42) connected to the booster duct (24).

14. Apparatus according to any one of claims 1 to 13, **characterised in that** it includes a first selector valve (34) suitable for adopting a first position in which it connects the auxiliary duct (22) to the fluid return tank (R) while isolating said auxiliary duct from the service duct (36), and a second position in which it connects said auxiliary duct (22) to the service duct (36) while isolating said auxiliary duct from the fluid return tank (R).

15. Apparatus according to any one of claims 1 to 14, **characterised in that** it includes a tank (A) for accumulating fluid under pressure and suitable for being connected to the main ducts, at least during the initialisation stage.

16. Apparatus according to any one of claims 1 to 15, **characterised in that** it includes a second selector valve (44) suitable for adopting a first position (1) in which it connects both main ducts (18, 20) to the fluid return tank (R), a second position (2) in which it causes the main ducts (18, 20) to communicate with each other while isolating said main ducts from the fluid return tank, and a third position (3) in which it isolates the main ducts (18, 20) from each other and from the fluid return tank (R).

17. Apparatus according to any one of claims 1 to 16, **characterised in that** it includes means for causing the motor (M) to pass from its working configuration to its free-wheel configuration, suitable for implementing a deactivation stage in which the first drive means are inactive, in which the auxiliary duct (22) is isolated from the fluid return tank (R) and is connected to the service duct (36) which is fed with fluid under pressure, and in which the main ducts (18, 20) are put into communication with the fluid return tank (R).

18. Apparatus according to claim 17, comprising a booster fluid source (P_{G}) designed to maintain a booster pressure in the main ducts (18, 20), the apparatus being **characterised in that** it includes a deactivation valve (129) suitable, when the motor (M) passes to its working configuration to its free-wheel configuration, for adopting during the deactivation stage a transient state in which it isolates the main ducts from the booster source (P_{G}).
